# EUROPÄISCHE PATENTSCHRIFT

(11) **EP 2 857 274 B1**
(45) Veröffentlichungstag und Bekanntmachung des Hinweises auf die Patenterteilung: **17.10.2018**
(21) Anmeldenummer: 14001824.3
(22) Anmeldetag: 24.05.2014
(51) Int. Cl.: B60W 30/18, B60W 40/109, B60W 40/13

(54) **Verfahren und Fahrdynamikregelungseinrichtung zur Ermittlung kritischer Querbeschleunigungswerte eines Kraftfahrzeugs**
Method and dynamic movement control device for detection of critical transverse accelerating values of a motor vehicle
Procédé et dispositif de régulation de la dynamique d'un véhicule pour la détermination de valeurs d'accélération transversale critiques d'un véhicule automobile

(30) Priorität: 02.08.2013 DE 102013012992
(43) Veröffentlichungstag der Anmeldung: 08.04.2015
(73) Patentinhaber: WABCO GmbH, 30453 Hannover (DE)
(72) Erfinder: Tha, Ingo, 30449 Hannover (DE)

(56) Entgegenhaltungen:
- WO-A1-02/22416
- WO-A1-99/30941
- WO-A1-03/072397
- DE-A1- 19 751 925
- US-A1- 2004 111 208

## Beschreibung

Die Erfindung betrifft ein Verfahren zum Ermitteln kritischer Querbeschleunigungswerte eines Kraftfahrzeugs oder eines Fahrzeuggespanns nach dem Oberbegriff von Anspruch 1 sowie eine Fahrdynamikregelungseinrichtung zur Ermittelung kritischer Querbeschleunigungswerte eines Kraftfahrzeugs oder eines Fahrzeuggespanns nach dem Oberbegriff von Anspruch 6.

Es sind Verfahren zur Regelung der Fahrdynamik von Fahrzeugen sowie Fahrdynamikregelungseinrichtungen bekannt, mit denen durch Regeleingriffe auf den Antrieb und/oder die Bremsen das Fahrverhalten des Fahrzeugs stabilisiert wird. Beispielsweise kann durch gezieltes Abbremsen oder Beschleunigen einzelner Räder dem Ausbrechen oder Umkippen eines Fahrzeugs entgegengewirkt werden. Die Fahrdynamikregelungseinrichtung umfasst in diesem Fall eine sog. "Roll-Over-Prevention-Funktion" (ROP).

Hierbei wird die auf das Fahrzeug wirkende Querbeschleunigung überwacht und in Abhängigkeit der Masse des Fahrzeugs kritische Querbeschleunigungswerte bestimmt. Im Falle, dass die auf das Kraftfahrzeug wirkende Querbeschleunigung den kritischen Querbeschleunigungswerten entspricht bzw. diese erreicht, wird von der Fahrdynamikregelungseinrichtung in die Bremsansteuerung und/oder der Antrieb des Kraftfahrzeugs eingegriffen, sodass Gefahrensituationen, insbesondere das Umkippen des Kraftfahrzeugs, weitestgehend verhindert werden.

Hierbei wird üblicherweise mit zunehmender Masse des Kraftfahrzeugs eine zunehmende Höhe eines Schwerpunkts des Kraftfahrzeugs angenommen und die kritischen Querbeschleunigungswerte an diese angenommene Schwerpunkthöhe angepasst bzw. die kritischen Querbeschleunigungswerte aus diesem Schwerpunkt bzw. der Schwerpunktlage bestimmt.

Im Falle einer schweren Ladung mit hoher Massendichte, also einer schweren Ladung mit einem geringen Volumen, wird dann ein hoher Schwerpunkt angenommen, obwohl dieser tatsächlich tiefer liegt. Dies führt zu kritischen Querbeschleunigungswerten, die zu Regeleingriffen der Fahrdynamikregelungseinrichtung führen, obwohl diese Eingriffe aufgrund des tatsächlich tiefer liegenden Schwerpunkts gar nicht nötig sind.

Im Falle einer leichten Ladung mit geringer Massendichte, also einer leichten Ladung mit einem großen Volumen, wird dann ein niedriger Schwerpunkt angenommen, obwohl dieser tatsächlich höher liegt. Dies führt zu kritischen Querbeschleunigungswerten, die erst bei vergleichsweise großen Querbeschleunigungen zu Regeleingriffen der Fahrdynamikregelungseinrichtung führen, wodurch die Gefahr eines Umkippens des Fahrzeugs besteht.

Es sind daher Verfahren und Vorrichtungen zur Ermittlung der tatsächlichen Schwerpunkthöhe bekannt. DE 10 2011 113 620 A1 zeigt ein Verfahren, bei dem mittels des Radschlupfes und weiterer Faktoren während normaler Kurvenfahrten die Schwerpunkthöhe abgeschätzt wird. Diese Art der Schwerpunktbestimmung ist jedoch recht ungenau. Ferner sind auch genauere Verfahren bekannt, bei dem eine Testbremsung in Kurvenfahrten durchgeführt wird und die Radreaktion des oder der gebremsten Räder, also der Schlupf des oder der gebremsten Räder, detektiert und mittels diesem Schlupf die Schwerpunkthöhe bestimmt wird. Je höher der Schlupf des oder der Räder auf der Kurveninnenseite ist, desto höher liegt der Schwerpunkt. Diese Verfahren haben jedoch den Nachteil, dass die Testbremsungen für den Fahrer spürbar sind und daher zu einem abnehmenden Fahrkomfort beitragen.

Die DE19751925A1 beschreibt ein Verfahren und eine Vorrichtung zur Erkennung der Kipptendenz eines Fahrzeuges. Die WO2002/022416A1 offenbart ein Verfahren zum Abschätzen der Umkippgefahr eines Fahrzeuges. Die WO1999/030941A1 beschreibt ein Verfahren und eine Vorrichtung zur Begrenzung der Querbeschleunigung eines fahrenden Fahrzeuges. Die US2004/0111208A1 offenbart ein Umkippverhinderungsverfahren für ein Kraftfahrzeug.

Der Erfindung liegt daher die Aufgabe zugrunde kritische Querbeschleunigungswerte eines Kraftfahrzeugs zu ermitteln, wobei diese möglichst genau bestimmt und der Fahrkomfort des Fahrers nicht spürbar beeinträchtigt werden soll.

Die Erfindung löst diese Aufgabe durch ein Verfahren zum Ermitteln eines oder mehrerer kritischer Querbeschleunigungswerte eines Kraftfahrzeugs oder eines Fahrzeuggespanns nach Anspruch 1 sowie eine Fahrdynamikregelungseinrichtung zur Ermittelung eines oder mehrerer kritischer Querbeschleunigungswerte eines Kraftfahrzeugs oder eines Fahrzeuggespanns nach Anspruch 6.

Die Erfindung umfasst dazu ein Verfahren und eine Fahrdynamikregelungseinrichtung insbesondere zur Ausführung des Verfahrens. Mittels der Fahrdynamikregelungseinrichtung werden ein oder mehrere kritische Querbeschleunigungswerte eines Kraftfahrzeugs oder eines Fahrzeuggespanns mit einem Kraftfahrzeug ermittelt. Hierzu weist die Fahrdynamikregelungseinrichtung mindestens einen Querbeschleunigungssensor auf. Mit diesem Querbeschleunigungssensor werden auf das Kraftfahrzeug wirkende Querbeschleunigungen, die insbesondere in Kurvenfahrten auftreten, ermittelt. Ein Kraftfahrzeug ist hier z.B. ein Personenkraftwagen, ein Lastkraftwagen oder ein Sattelkraftfahrzeug.

Im Falle, dass die mit Querbeschleunigungssensor ermittelte Querbeschleunigung einem oder mehreren kritischen Querbeschleunigungswerten entspricht, wird mit der Fahrdynamikregelungseinrichtung durch Regeleingriffe auf einen Antrieb und/oder eine Bremseinrichtung das Fahrverhalten des Kraftfahrzeugs oder des Fahrzeuggespanns stabilisiert. Hierdurch wird ein Umkippen des Fahrzeugs weitestgehend verhindert.

Die Fahrdynamikregelungseinrichtung weist Antriebsansteuerungsmittel und Bremsansteuerungsmittel auf. Diese dienen z.B., um Steuersignale an die Bremsansteuerung des Kraftfahrzeugs oder des Fahrzeuggespanns und/oder den Antrieb des Kraftfahrzeugs zu senden und um durch diese Steuersignale ein, mehrere oder alle Räder des Kraftfahrzeugs oder des Fahrzeuggespanns einzubremsen oder mit einem Drehmoment anzutreiben.

Erfindungsgemäß wird eine Querbeschleunigungsschwelle vordefiniert, d.h. es wird eine Querbeschleunigung festgelegt, die es z.B. unter Berücksichtigung der minimalen und maximalen Fahrzeugmasse ermöglicht, einen Schlupf an abgebremsten oder beschleunigten Rädern auf einer Kurveninnenseite gegenüber den nicht abgebremsten oder beschleunigten Rädern zu messen bzw. zu ermitteln, ohne dass jedoch die Gefahr eines Umkippens des Fahrzeugs besteht.

Im Falle, dass die mit dem Querbeschleunigungssensor ermittelte Querbeschleunigung nun die vordefinierte Querbeschleunigungsschwelle erreicht oder überschreitet, wird für eine vorbestimmte Testdauer mindestens eine Antriebsachse des Kraftfahrzeugs mit einem zusätzlichen Testantriebsmoment zusätzlich angetrieben und mindestens eine nicht mit dem Testantriebsmoment angetriebene Achse des Kraftfahrzeugs oder des Fahrzeuggespanns mit einem zusätzlichen Testbremsdruck zusätzlich eingebremst. Die Fahrdynamikregelungseinrichtung erzeugt das zusätzliche Testantriebsmoment mit den Antriebsansteuerungsmitteln und den Testbremsdruck mit den Bremsansteuerungsmitteln.

Ferner wird das zusätzliche Testantriebsmoment und der zusätzliche Testbremsdruck derart gewählt, dass die Fahrt des Kraftfahrzeugs oder des Fahrzeuggespanns weder verzögert noch beschleunigt wird. Es werden also auf die Räder, insbesondere zu durch die normale Fahrt bereits ausgeübten Kräften, zusätzliche Kräfte ausgeübt. Diese Kräfte sind z.B. in Abhängigkeit der aktuell auf das Fahrzeug ausgeübten bzw. bestimmten Querbeschleunigung zu wählen. Im Falle einer flachen Kurve, sind z.B. das Testantriebsmoment und der zusätzliche Testbremsdruck so zu wählen, dass die dadurch erzeugten Kräfte sich weitestgehend aufheben.

Während einer Testdauer, in der das zusätzliche Antreiben und das zusätzliche Abbremsen ausgeführt werden, wird der Schlupf zumindest an den auf der Kurveninnenseite liegenden Räder der zusätzlich eingebremsten und zusätzlich angetriebenen Achsen ermittelt. Die Testdauer wird daher so gewählt bzw. vordefiniert oder vorbestimmt, dass ein durch das Testantriebsmoment und den Testbremsdruck auftretender Schlupf messbar oder ermittelbar ist, wobei diese Testdauer damit z.B. abhängig von der aktuellen ermittelten Querbeschleunigung ist. Hierzu weist die Fahrdynamikregelungseinrichtung selbst Schlupfdetektionsmittel auf oder ist mit Schlupfdetektionsmitteln z.B. eines vorhandenen Antiblockiersystem (ABS) elektrisch verbunden, sodass ein vom ABS detektierter Schlupf der Fahrdynamikregelungseinrichtung zugeführt wird. Diese elektrische Verbindung erfolgt gemäß einem besonderen Ausführungsbeispiel mit einem Bussystem, insbesondere einem CAN-BUS. Schlupfdetektionsmittel umfassen z.B. Mittel zur Aufnahme der Drehzahl und/oder Drehgeschwindigkeit mehrerer oder aller Räder des Kraftfahrzeugs oder des Fahrzeuggespanns und Vergleichsmittel um die Drehzahlen und Drehgeschwindigkeiten miteinander zu vergleichen.

Der Schlupf wird während der Testdauer demnach z.B. ermittelt, indem die Drehzahlen und/oder Drehgeschwindigkeiten zumindest der auf der Kurveninnenseite liegenden Räder der zusätzlich eingebremsten und zusätzlich angetriebenen Achsen mit den Drehzahlen und/oder Drehgeschwindigkeiten mindestens eines der Räder der nicht eingebremsten und nicht angetriebenen Achsen verglichen wird.

Ferner werden mit dem ermittelten Schlupf, d.h. mit jedem Schlupf jeweils eines zumindest der auf der Kurveninnenseite liegenden Räder der zusätzlich eingebremsten und zusätzlich angetriebenen Achsen, der oder die kritischen Querbeschleunigungswerte des Kraftfahrzeugs oder des Fahrzeuggespanns ermittelt. Die Ermittlung der Schwerpunkthöhe findet aufgrund eines funktionellen Zusammenhangs der kritischen Querbeschleunigungswerte, also der Werte der Querbeschleunigung bei der ein Kippen droht, mit dem gemessenen Schlupf statt. Anhand des ermittelten Schlupfes an den kurveninneren zusätzlich eingebremsten und zusätzlich angetriebenen Rädern bei aktueller bzw. gegebener Querbeschleunigung durch die Kurvenfahrt während der Testdauer kann nämlich bereits darauf geschlossen werden, ab welcher Querbeschleunigung die Gefahr des Kippens droht und somit kritische Querbeschleunigungswerte angenommen werden müssen.

Werden z.B. Querbeschleunigungen durch in eine erste Richtung ,z.B. in Querrichtung des Fahrzeugs nach Links, wirkende Kräfte mit positiven Querbeschleunigungswerten und Querbeschleunigungen durch in die entgegen gesetzte zweite Richtung, z.B. in Querrichtung des Fahrzeugs nach Rechts, wirkende Kräfte mit negativen Querbeschleunigungswerten versehen, so werden z.B. positive und negative kritische Querbeschleunigungswerte bestimmt. Bei einem in die erste Richtung verschobenen Schwerpunkt werden die positiven und negativen kritischen Querbeschleunigungswerte gegenüber den kritischen Querbeschleunigungswerten eines unbeladenen Fahrzeugs abgesenkt. Durch die Bestimmung der positiven und negativen kritischen Querbeschleunigungswerte werden somit zwei unterschiedliche Schwellen für die Querbeschleunigungswerte, also eine für Linkskurvenfahrten die andere für Rechtskurvenfahrten, definiert.

Dank der Erfindung sind somit kritische Querbeschleunigungswerte sehr genau bestimmbar, wobei durch die Wahl des Testantriebsmoments und des Testbremsdrucks, sodass die Fahrt des Kraftfahrzeugs oder des Fahrzeuggespanns weder verzögert noch beschleunigt wird, der Fahrkomfort des Fahrers nicht spürbar beeinträchtigt wird. Vorteilhafterweise ist mit der Bestimmung der kritischen Querbeschleunigungswerte die Kippstabilität des Kraftfahrzeugs einfach und genau bestimmbar.

Ein Schlupf wird am wahrscheinlichste z.B. an den Hinterachsen eines als Lastkraftwagen ausgebildeten Kraftfahrzeugs, das Beladen ist, auftreten, da das Fahrzeug durch die Beladung die größte Masse im hinteren Bereich des Fahrzeugs aufweist und bei einer Kurvenfahrt die Radlast daher eher von einem der Räder der Achse auf das andere Rad der Achse verlagert wird. Bei einem als Sattelkraftfahrzeug ausgebildeten Fahrzeug, das Beladen ist, wird ein Schlupf am wahrscheinlichsten an einer den Achsen des Sattelaufliegers auftreten, da dieser durch die Beladung die größte Masse aufweist. Es ist daher gemäß einer besonderen Ausführungsform vorteilhaft, zumindest eine der hinteren Achsen eines als Lastkraftwagen ausgebildeten Kraftfahrzeugs während der Testdauer mit dem Testbremsdruck einzubremsen oder mit dem Testantriebsmoment anzutreiben. Gemäß einer weiteren besonderen Ausführungsform ist es ferner vorteilhaft, zumindest eine der Achsen eines Sattelaufliegers von einem als Sattelkraftfahrzeug ausgebildeten Kraftfahrzeugs während der Testdauer mit dem Testbremsdruck einzubremsen oder mit dem Testantriebsmoment anzutreiben.

Gemäß einer weiteren Ausführungsform wird mit den Schlupfdetektionsmitteln der Schlupf der auf der Kurvenaußenseite liegenden Räder der zusätzlich eingebremsten und zusätzlich angetriebenen Achsen ermittelt. Im Falle, dass der ermittelte Schlupf eines oder mehrerer der auf der Kurvenaußenseite liegenden Räder der eingebremsten und angetriebenen Achsen einen Wert oberhalb eines Schwellenwerts aufweist, wird das zusätzliche Einbremsen und zusätzliche Antreiben durch die Antriebsansteuerungsmittel und Bremsansteuerungsmittel bereits vor Ablauf der Testdauer abgebrochen.

Durch diesen Abbruch des zusätzlichen Einbremsens und zusätzlichen Antreibens wird gewährleistet, dass der Antrieb, die Bremsen und die zusätzlich eingebremsten und angetriebenen Räder geschont werden, da in diesem Fall davon ausgegangen werden kann, dass der Untergrund des Fahrzeugs glatt ist, somit die Reibungskraft aller Räder auf der Fahrbahn gering ist und daher aus dem ermittelten Schlupf ohnehin in diesem Fall nicht zuverlässig auf die kritischen Querbeschleunigungswerte geschlossen werden kann.

Gemäß einer weiteren Ausführungsform wird ein von einem Fahrer des Kraftfahrzeugs oder des Fahrzeuggespanns angefordertes zusätzliches Bremsen oder zusätzliches Beschleunigen, das während der Testdauer angefordert wird, zusätzlich ausgeführt und bei der Ermittlung der kritischen Querbeschleunigungswerte berücksichtigt.

Wird also vom Fahrer eine Beschleunigung während der Testdauer angefordert, so werden z.B. die Antriebsachse oder die Antriebsachsen gemäß dieser Anforderung mit einem der angeforderten Beschleunigung entsprechenden zusätzlichen Antriebsmoment angetrieben. Im Falle nur einer Antriebsachse des Kraftfahrzeugs, wird auf diese also das angeforderte Antriebsmoment zuzüglich des Testantriebsmoments ausgeübt. Im Falle mehrere Antriebsachsen, wird auf die Antriebsachsen jeweils das angeforderte Antriebsmoment und auf die für die Bestimmung der kritischen Querbeschleunigungswerte ausgewählte Achse oder ausgewählten Achsen jeweils das angeforderte Antriebsmoment zuzüglich dem Testantriebsmoment ausgeübt. Entsprechendes gilt für eine angeforderte Bremsung während der Testdauer.

Ferner wird auch gemäß dieser Ausführungsform der Schlupf gemessen und daraus die kritischen Querbeschleunigungswerte bestimmt. Bei der Bestimmung der kritischen Querbeschleunigungswerte wird jedoch zusätzlich die Beschleunigungsanforderung oder Bremsanforderung, die z.B. zu einem verringerten oder erhöhten ermittelten Schlupf führt, berücksichtigt.

Gemäß einer weiteren Ausführungsform werden die kritischen Querbeschleunigungswerte unter Berücksichtigung des, insbesondere mit Schlupfdetektionsmittel, ermittelten Schlupfes eines oder mehrer der zusätzlich eingebremsten und beschleunigten Räder und der, insbesondere mit dem Querbeschleunigungssensor, ermittelten Querbeschleunigung ermittelt.

Da der Schlupf von der Querbeschleunigung abhängig ist, sich also z.B. beim Erhöhen der Querbeschleunigung bei vergleichsweise gleicher Schwerpunkthöhe ebenfalls erhöht, ist es für eine genauere Bestimmung der kritischen Querbeschleunigungswerte vorteilhaft, eine sich während der Testdauer ändernde Querbeschleunigung zu berücksichtigen, anstatt die kritischen Querbeschleunigungswerte nur anhand der vordefinierten Querbeschleunigungsschwelle und dem ermittelten Schlupf zu bestimmen.

Gemäß einer weiteren Ausführungsform werden die kritische Querbeschleunigungswerte mit dem Schlupf bestimmt, indem zunächst aus dem Schlupf der Schwerpunkt, insbesondere die Schwerpunkthöhe, und mittels des Scherpunkts die kritischen Querbeschleunigungswerte bestimmt werden. Diese kritischen Querbeschleunigungswerte werden anhand der Schwerpunkthöhe unter Berücksichtigung fahrzeugspezifischer Daten, wie z.B. der Masse, so gewählt, dass Querbeschleunigungen, die diesen kritischen Querbeschleunigungswerten gleichen bzw. entsprechen, eine Gefahrensituation für das Kraftfahrzeug oder das Fahrzeuggespann bedeuten können.

Weitere Ausführungsformen der Erfindung ergeben sich aus den Unteransprüchen sowie aus den anhand der Zeichnungen näher erläuterten Ausführungsbeispielen. In den Zeichnungen zeigen:
- Fig. 1: den Ablauf eines Ausführungsbeispiels des erfindungsgemäßen Verfahrens und
- Fig. 2: eine schematische Teilansicht eines als Lastkraftwagen ausgebildeten Kraftfahrzeug mit einem Ausführungsbeispiel der Fahrdynamikregelungseinrichtung.

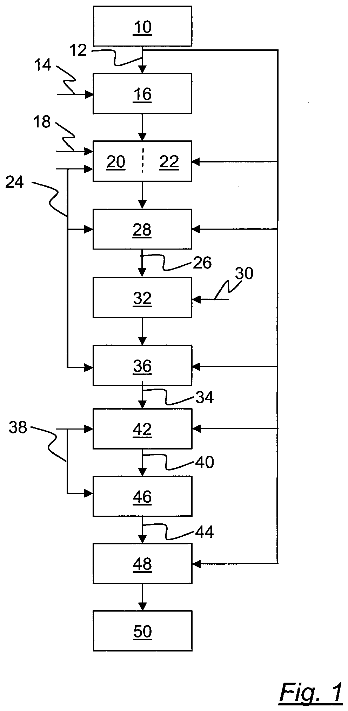

Fig. 1 zeigt den Ablauf eines Ausführungsbeispiels des Verfahrens. Zunächst wird mit einem Querbeschleunigungssensor die auf das Kraftfahrzeug wirkende Querbeschleunigung ermittelt 10. Die Querbeschleunigung 12 wird mit einem vorbestimmten Querbeschleunigungsschwellenwert 14 verglichen 16. Ergibt der Vergleich 14, dass die Querbeschleunigung 12 die Querbeschleunigungsschwelle 14 erreicht oder überschreitet, so wird für eine vorbestimmte Testdauer 18 mindestens eine Antriebsachse des Kraftfahrzeugs mit einem zusätzlichen Testantriebsmoment angetrieben 20 und mindestens eine nicht mit dem zusätzlichen Testantriebsmoment angetriebene Achse des Kraftfahrzeugs oder des Fahrzeuggespanns mit einem zusätzlichen Testbremsdruck eingebremst 22. Das Testantriebsmoment und der Testbremsdruck werden derart gewählt, dass die Fahrt des Kraftfahrzeugs oder des Fahrzeuggespanns weder verzögert noch beschleunigt wird, wobei jedoch ein Fahrerwunsch 24, insbesondere ein angefordertes Bremsen oder Beschleunigen ausgeführt wird. Ferner wird bei der Wahl des Testantriebsmoments und des Testbremsdrucks auch die aktuelle Querbeschleunigung 12 berücksichtigt.

Daraufhin wird während der Testdauer der Schlupf 26 der auf der Kurvenaußenseite liegenden Räder der zusätzlich eingebremsten und zusätzlich angetriebenen Achsen ermittelt 28. Hierbei werden ein Fahrerwunsch 24, der ausgeführt wurde und Einfluss auf den Schlupf hat, sowie die aktuelle Querbeschleunigung 12, die ebenfalls Einfluss auf den Schlupf hat, berücksichtigt. Der Schlupf 26 wird mit einem Schwellenwert 30 verglichen 32 und im Fall, dass der ermittelte Schlupf 26 oberhalb des vordefinierten Schwellenwerts 30 liegt, wird das zusätzliche Einbremsen und das zusätzliche Antreiben bereits vor Ablauf der Testdauer 18 abgebrochen.

Liegt der ermittelte Schlupf 26 der kurvenäußeren Räder unterhalb des vordefinierten Schwellenwerts 30, wird der Schlupf 34 der auf der Kurveninnenseite liegenden Räder der zusätzlich eingebremsten und zusätzlich angetriebenen Achsen ermittelt 36. Hierbei werden ebenfalls ein Fahrerwunsch 24 sowie die aktuelle Querbeschleunigung 12, die Einfluss auf den Schlupf 34 haben, berücksichtigt. Mit diesem Schlupf 34, Fahrzeugparametern 38, wie der Masse des Fahrzeugs, und der Querbeschleunigung 12 wird der Schwerpunkt 40 bzw. die Schwerpunktlage, insbesondere die Schwerpunkthöhe ermittelt 42.

Mit dem Schwerpunkt 40 werden unter Berücksichtung der Fahrzeugparameter 38 ein oder mehrere kritische Querbeschleunigungswerte 44 bestimmt 46, bei denen die Gefahr eines Umkippen besteht. Daraufhin werden die ermittelten Querbeschleunigungen 12 mit den kritischen Querbeschleunigungswerten 44 verglichen.

Im Falle, dass die ermittelten Querbeschleunigungen 12 diesem oder diesen kritischen Querbeschleunigungswerten entsprechen, wird von der Fahrdynamikregelungseinrichtung durch Regeleingriffe auf den Antrieb und/oder die Bremsen das Fahrverhalten des Kraftfahrzeugs oder des Fahrzeuggespanns stabilisiert 50.

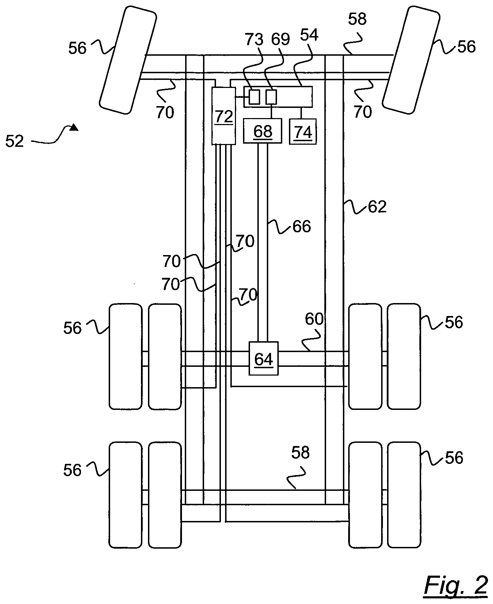

Fig. 2 zeigt ein Kraftfahrzeug 52 mit einem Ausführungsbeispiel der Fahrdynamikregelungseinrichtung 54 zur Ausführung eines Ausführungsbeispiels des erfindungsgemäßen Verfahrens. Die Ansicht entspricht einer Draufsicht auf ein Fahrzeug 52 gemäß einer schematischen Schnittdarstellung.

Das Fahrzeug weist Räder 56 auf, die mit nicht antreibbaren Achsen 58 und einer Antriebsachse 60 verbunden sind. Die Räder 56 bzw. die Achsen 58, 60 sind über nicht dargestellte Federn mit einen Fahrzeugrahmen 62 verbunden. Die Antriebsachse 60 ist über ein Differential 64 und eine Antriebswelle 66 mit einem Antrieb 68 verbunden. Das Differential 64 ist mit der Fahrdynamikregelungseinrichtung 54 zur Durchführung des erfindungsgemäßen Verfahrens z.B. sperrbar, sodass ein ausgeübtes Testantriebsmoment z.B. auf beide Räder 56 der Antriebsachse 60 gleichermaßen wirkt. Der Antrieb 68 dient, um die Räder 56 der Achse 60 anzutreiben. Der Antrieb 68 ist mit der Fahrdynamikregelungseinrichtung 54 verbunden, die mittels einem Antriebsansteuerungsmittel 69 der Fahrdynamikregelungseinrichtung 54 den Antrieb 68 durch Steuersignale veranlassen kann, ein von der Fahrdynamikregelungseinrichtung 54 vorgegebenes Antriebsmoment, insbesondere ein Testantriebsmoment, auf die Räder 56 der Achse 60 auszuüben.

Ferner ist eine nicht dargestellte Bremse jedes Rades 56 jeweils über eine Druckleitung 70 mit einer Bremseinrichtung 72 verbunden. Die Bremseinrichtung 72 dient, um auf jede Bremse jedes Rades 56 separat einen Bremsdruck auszuüben. Die Bremseinrichtung 72 ist mit der Fahrdynamikregelungseinrichtung 54 verbunden, die die Bremseinrichtung 72 durch Steuersignale mittels einem Bremsansteuerungsmittel 73 veranlassen kann, einen von der Fahrdynamikregelungseinrichtung 54 vorgegebenen Bremsdruck, insbesondere einen Testbremsdruck, auf die Räder 56 bzw. deren Bremsen auszuüben.

Ferner weist das Fahrzeug 52 einen Querbeschleunigungssensor 74 auf, der hier mit der Fahrdynamikregelungseinrichtung 54 verbunden ist. Gemäß einem anderen Ausführungsbeispiel ist der Querbeschleunigungssensor 74 ein Bestandteil der Fahrdynamikregelungseinrichtung 54. Mit dem Querbeschleunigungssensor 74 werden auf das Fahrzeug 52 wirkende Querbeschleunigungen gemessen und für die weitere Verarbeitung der Fahrdynamikregelungseinrichtung 54 zugeführt. Ferner ist die Fahrdynamikregelungseinrichtung 54 mit einem zur besseren Übersicht nicht dargestellten Antiblockiersystem (ABS) verbunden. Das ABS weist Sensoren an jedem Rad 56 auf, mit denen der Radzustand, also die Drehzahl und/oder Geschwindigkeit, ermittelbar ist. Die Radzustände können über die Verbindung mit der Fahrdynamikregelungseinrichtung 54 von dieser abgerufen werden.

Mit der Fahrdynamikregelungseinrichtung 54 werden somit mit dem Querbeschleunigungssensor 74 die auf das Kraftfahrzeug 52 wirkenden Querbeschleunigungen ermittelt. Im Falle, dass die Querbeschleunigung eine vordefinierte Querbeschleunigungsschwelle erreicht oder überschreitet, wird für eine vorbestimmte Testdauer mit den Antriebsansteuerungsmittein 69 mindestens eine Antriebsachse 60 des Kraftfahrzeugs 52 mit einem zusätzlichen Testantriebsmoment angetrieben und mit den Bremsansteuerungsmitteln 73 mindestens eine nicht mit dem zusätzlichen Testantriebsmoment angetriebene Achse 58, 60 des Kraftfahrzeugs 52 mit einem Testbremsdruck eingebremst. Hierbei ist die Fahrdynamikregelungseinrichtung 54 derart ausgebildet, um das Testantriebsmoment und den Testbremsdruck derart zu wählen, dass die Fahrt des Kraftfahrzeugs 52 weder verzögert noch beschleunigt wird. Ferner ist die Fahrdynamikregelungseinrichtung derart ausgebildet, um mit Schlupfdetektionsmitteln, z.B. den beschriebenen aber nicht dargestellten ABS-Sensoren, den Schlupf zumindest der auf der Kurveninnenseite liegenden Räder der eingebremsten und angetriebenen Achsen 58, 60 zu ermitteln und mit dem Schlupf den Schwerpunkt, insbesondere die Schwerpunkthöhe, und daraus die kritischen Querbeschleunigungswerte des Kraftfahrzeugs 52 zu ermitteln.

### Bezugszeichenliste (Bestandteil der Beschreibung)

10 Ermitteln der Querbeschleunigung
12 Querbeschleunigung
14 vorbestimmte Querbeschleunigungsschwelle
16 Vergleich der Querbeschleunigung mit der Querbeschleunigungsschwelle
18 vorbestimmte Testdauer
20 Antreiben mit Testantriebsmoment
22 Bremsen mit Testbremsdruck
24 Fahrerwunsch
26 Schlupf der kurvenäußeren Räder
28 Ermitteln des Schlupfes der kurvenäußeren Räder
30 Schwellenwert
32 Vergleich des Schlupfes der kurvenäußeren Räder mit dem Schwellenwert
34 Schlupf der kurveninneren Räder
36 Ermitteln des Schlupfes der kurveninneren Räder
38 Fahrzeugparameter
40 Schwerpunkt
42 Ermitteln des Schwerpunkts
44 kritische Querbeschleunigungswerte
46 Ermitteln der kritischen Querbeschleunigungswerte
48 Vergleich der kritischen Querbeschleunigungswerte mit der Querbeschleunigung
50 Stabilisieren des Fahrverhaltens
52 Kraftfahrzeug
54 Fahrdynamikregelungseinrichtung
56 Räder
58 nicht antreibbare Achsen
60 Antriebsachse
62 Fahrzeugrahmen
64 Differential
66 Antriebswelle
68 Antrieb
69 Antriebsansteuerungsmittel
70 Druckleitung
72 Bremseinrichtung
73 Bremsansteuerungsmittel
74 Querbeschleunigungssensor

## Patentansprüche

1. Verfahren zum Ermitteln eines oder mehrerer kritischer Querbeschleunigungswerte eines Kraftfahrzeugs (52) oder eines Fahrzeuggespanns mit einem Kraftfahrzeug (52), wobei das Kraftfahrzeug (52) eine Fahrdynamikregelungseinrichtung (54) und mindestens einem Querbeschleunigungssensor (74) aufweist und mit dem Querbeschleunigungssensor (74) die auf das Kraftfahrzeug (52) wirkende Querbeschleunigung (12) ermittelt (10) wird und im Falle, dass die mit dem Querbeschleunigungssensor (74) ermittelte Querbeschleunigung (12) einem oder mehreren kritischen Querbeschleunigungswerten (44) entspricht, mit der Fahrdynamikregelungseinrichtung (54) durch Regeleingriffe auf einen Antrieb (68) und/oder eine Bremseinrichtung (72) das Fahrverhalten des Kraftfahrzeugs (62) oder des Fahrzeuggespanns stabilisiert (50) wird,
**dadurch gekennzeichnet, dass**
im Falle, dass eine ermittelte Querbeschleunigung (12) eine vordefinierte Querbeschleunigungsschwelle (14) erreicht oder überschreitet für eine vorbestimmte Testdauer (18) mindestens eine Antriebsachse (60) des Kraftfahrzeugs (52) mit einem zusätzlichen Testantriebsmoment angetrieben (20) und mindestens eine nicht mit dem Testantriebsmoment angetriebene Achse (58, 60) des Kraftfahrzeugs (52) oder des Fahrzeuggespanns mit einem zusätzlichen Testbremsdruck eingebremst (22) wird, wobei das Testantriebsmoment und der Testbremsdruck derart gewählt werden, dass die Fahrt des Kraftfahrzeugs (52) oder des Fahrzeuggespanns durch diese weder verzögert noch beschleunigt wird, und ein Schlupf (34) zumindest der auf der Kurveninnenseite liegenden Räder (56) der eingebremsten und angetriebenen Achsen (58, 60) ermittelt und mit dem Schlupf (34) die kritischen Querbeschleunigungswerte (44) ermittelt (46) werden.

2. Verfahren nach Anspruch 1,
**dadurch gekennzeichnet, dass**
während des zusätzlichen Abbremsens und Antreibens der Schlupf (26) der auf der Kurvenaußenseite liegenden Räder (56) der eingebremsten und angetriebenen Achsen (58, 60) ermittelt (28) wird und im Falle eines ermittelten Schlupfes (26) der auf der Kurvenaußenseite liegenden Räder (56) der eingebremsten und angetriebenen Achsen (58, 60) oberhalb eines Schwellenwerts (30), das zusätzliche Einbremsen (22) und Antreiben (20) bereits vor Ablauf der Testdauer (18) abgebrochen wird.

3. Verfahren nach Anspruch 1 oder 2,
**dadurch gekennzeichnet, dass**
während des zusätzlichen Abbremsens und Antreibens im Falle eines von einem Fahrer des Kraftfahrzeugs (52) oder des Fahrzeuggespanns angeforderten Bremsens oder Beschleunigens (24), dieses angeforderte Bremsen oder Beschleunigen zusätzlich ausgeführt wird und bei der Ermittlung (46) der kritischen Querbeschleunigungswerte (44) berücksichtigt wird.

4. Verfahren nach einem der Ansprüche 1 bis 3,
**dadurch gekennzeichnet, dass**
die kritischen Querbeschleunigungswerte (44), zumindest unter Berücksichtigung des Schlupfes (26, 34) eines oder mehrerer Räder (56) beim zusätzlichen Abbremsen und Antreiben und der ermittelten Querbeschleunigung (12) ermittelt werden.

5. Verfahren nach einem der Ansprüche 1 bis 4,
**dadurch gekennzeichnet, dass**
die kritische Querbeschleunigungswerte (44) mit dem Schlupf (34) bestimmt (46) werden, indem aus dem Schlupf (34) zunächst der Schwerpunkt (40), insbesondere die Schwerpunkthöhe, und mittels des Scherpunkts die kritischen Querbeschleunigungswerte (44) bestimmt (46) werden.

6. Fahrdynamikregelungseinrichtung (54) zur Ermittelung eines oder mehrerer kritischer Querbeschleunigungswerte eines Kraftfahrzeugs (52) oder eines Fahrzeuggespanns mit einem Kraftfahrzeug (52), wobei die Fahrdynamikregelungseinrichtung (54) mindestens einen Querbeschleunigungssensor (74) aufweist der dazu ausgebildet ist, um auf das Kraftfahrzeug (52) wirkende Querbeschleunigungen zu ermitteln, und die Fahrdynamikregelungseinrichtung (54) derart ausgebildet ist, um im Falle, dass die mit Querbeschleunigungssensor (74) ermittelte Querbeschleunigung (12) einem oder mehreren kritischen Querbeschleunigungswerten (44) entspricht, durch Regeleingriffe auf einen Antrieb (68) und/oder eine Bremseinrichtung (72) das Fahrverhalten des Kraftfahrzeugs (62) oder des Fahrzeuggespanns zu stabilisieren(50),
**dadurch gekennzeichnet, dass**
die Fahrdynamikregelungseinrichtung (54) Antriebsansteuerungsmittel (69) und Bremsansteuerungsmittel (73) aufweist und die Fahrdynamikregelungseinrichtung (54) derart ausgebildet ist, um im Falle, dass eine ermittelte Querbeschleunigung (12) eine vordefinierte Querbeschleunigungsschwelle (14) erreicht oder überschreitet, für eine vorbestimmte Testdauer (18) mit den Antriebsansteuerungsmitteln (69) mindestens eine Antriebsachse (60) des Kraftfahrzeugs (52) mit einem zusätzlichen Testantriebsmoment anzutreiben und mit den Bremsansteuerungsmitteln (73) mindestens eine nicht mit dem Testantriebsmoment angetriebene Achse (58, 60) des Kraftfahrzeugs (52) oder des Fahrzeuggespanns mit einem zusätzlichen Testbremsdruck einzubremsen, wobei die Fahrdynamikregelungseinrichtung (54) derart ausgebildet ist, um das Testantriebsmoment und den Testbremsdruck derart zu wählen, dass die Fahrt des Kraftfahrzeugs (52) oder des Fahrzeuggespanns durch diese weder verzögert noch beschleunigt wird, und die Fahrdynamikregelungseinrichtung (54) derart ausgebildet ist, um mit Schlupfdetektionsmitteln den Schlupf (36) zumindest der auf der Kurveninnenseite liegenden Räder (56) der eingebremsten und angetriebenen Achsen (58, 60) und mit dem Schlupf (36) die kritischen Querbeschleunigungswerte (44) zu ermitteln.

7. Fahrdynamikregelungseinrichtung nach Anspruch 6,
**dadurch gekennzeichnet, dass**
die Fahrdynamikregelungseinrichtung (54) derart ausgebildet ist, um mit den Schlupfdetektionsmitteln während des zusätzlichen Abbremsens und Antreibens den Schlupf (26) der auf der Kurvenaußenseite liegenden Räder (56) der eingebremsten und angetriebenen Achsen (58, 60) zu ermitteln und im Falle eines ermittelten Schlupfes (26) der auf der Kurvenaußenseite liegenden Räder (56) der eingebremsten und angetriebenen Achsen (58, 60) oberhalb eines Schwellenwerts (30), das zusätzliche Einbremsen und Antreiben durch die Antriebsansteuerungsmittel (69) und Bremsansteuerungsmittel (73) bereits vor Ablauf der Testdauer (18) abzubrechen.

8. Fahrdynamikregelungseinrichtung nach Anspruch 6 oder 7,
**dadurch gekennzeichnet, dass**
die Fahrdynamikregelungseinrichtung (54) derart ausgebildet ist, um während des zusätzlichen Abbremsens und Antreibens im Falle eines von einem Fahrer des Kraftfahrzeugs (52) oder des Fahrzeuggespanns angeforderten Bremsens oder Beschleunigens, dieses Bremsen oder Beschleunigen zusätzlich auszuführen und bei der Ermittlung der kritischen Querbeschleunigungswerte (44) zu berücksichtigen.

9. Fahrdynamikregelungseinrichtung nach einem der Ansprüche 6 bis 8,
**dadurch gekennzeichnet, dass**
die Fahrdynamikregelungseinrichtung (54) derart ausgebildet ist, um die kritischen Querbeschleunigungswerte (44) unter Berücksichtigung des während des zusätzlichen Abbremsens und Antreibens mit den Schlupfdetektionsmitteln ermittelten Schlupfes (26, 34) eines oder mehrerer Räder (56) und der mit dem Querbeschleunigungssensor (74) ermittelten Querbeschleunigung (12) zu ermitteln.

10. Fahrdynamikregelungseinrichtung nach einem der Ansprüche 6 bis 9,
**dadurch gekennzeichnet, dass**
die Fahrdynamikregelungseinrichtung (54) derart ausgebildet ist, um die kritische Querbeschleunigungswerte (44) mit dem Schlupf (34) zu bestimmen, indem aus dem Schlupf (34) zunächst der Schwerpunkt (40), insbesondere die Schwerpunkthöhe, und mittels des Scherpunkts die kritischen Querbeschleunigungswerte (44) bestimmt (46) werden.

## Claims

1. Method for detecting one or more critical transverse acceleration values of a motor vehicle (52) or of a vehicle combination with a motor vehicle (52), wherein the motor vehicle (52) has a vehicle movement dynamics control device (54) and at least one transverse acceleration sensor (74), and detects (10) the transverse acceleration (12) acting on the motor vehicle (52) using the transverse acceleration sensor (74), and in the event of the transverse acceleration (12) which is detected using the transverse acceleration sensor (74) corresponding to one or more critical transverse acceleration values (44) the driving behaviour of the motor vehicle (62) or of the vehicle combination is stabilized (50) with the vehicle movement dynamics control device (54) by means of control interventions in a drive (68) and/or a brake device (72),
**characterized in that**
in the event of a detected transverse acceleration (12) reaching or exceeding a predefined transverse acceleration threshold (14) for a predetermined test period (18) at least one drive axle (60) of the motor vehicle (52) is driven (20) with an additional test drive torque and at least one axle (58, 60) of the motor vehicle (52) or of the vehicle combination, which axle is not driven with the test drive torque, is braked (22) with an additional test brake pressure, wherein the test drive torque and the test brake pressure are selected such that the travel of the motor vehicle (52) or of the vehicle combination is neither decelerated nor accelerated by said test drive torque and test brake pressure, and a slip (34) at least of the wheels (56), lying on the inside of a bend, of the braked and driven axles (58, 60) is detected, and the critical transverse acceleration values (44) are detected (46) using the slip (34).

2. Method according to Claim 1,
**characterized in that**
during the additional braking and driving, the slip (26) of the wheels (56), lying on the outside of a bend, of the braked and driven axles (58, 60) is detected (28), and in the case of a detected slip (26) of the wheels (56), lying on the outside of a bend, of the braked and driven axles (58, 60) above a threshold value (30), the additional braking (22) and driving (20) is already aborted before the expiry of the test period (18).

3. Method according to Claim 1 or 2,
**characterized in that**
during the additional braking and driving, in the case of braking or acceleration (24) which is requested by a driver of the motor vehicle (52) or of the vehicle combination, this requested braking or acceleration is additionally executed and is taken into account during the detection (46) of the critical transverse acceleration values (44).

4. Method according to one of Claims 1 to 3,
**characterized in that**
the critical transverse acceleration values (44) are detected at least taking into account the slip (26, 34) of one or more wheels (56) during the additional braking and driving and the detected transverse acceleration (12).

5. Method according to one of Claims 1 to 4,
**characterized in that**
the critical transverse acceleration values (44) are determined (46) with the slip (34) **in that** firstly the centre of gravity (40), in particular the height of the centre of gravity, is determined (46) from the slip (34), and the critical transverse acceleration values (44) are determined (46) by means of the centre of gravity.

6. Vehicle movement dynamics control device (54) for detecting one or more critical transverse acceleration values of a motor vehicle (52) or of a vehicle combination with a motor vehicle (52), wherein the vehicle movement dynamics control device (54) has at least one transverse acceleration sensor (74) which is designed to detect transverse accelerations acting on the motor vehicle (52), and the vehicle movement dynamics control device (54) is designed in such a way that, in the event of the transverse acceleration (12) detected using the transverse acceleration sensor (74) corresponding to one or more critical transverse acceleration valves (44), said vehicle movement dynamics control device (54) stabilizes (50) the driving behaviour of the motor vehicle (62) or of the vehicle combination by means of control interventions in a drive (68) and/or a brake device (72),
**characterized in that**
the vehicle movement dynamics control device (54) has drive actuation means (69) and brake actuation means (73), and the vehicle movement dynamics control device (54) is designed such that, in the event of a detected transverse acceleration (12) reaching or exceeding a predefined transverse acceleration threshold (14), said vehicle movement dynamics control device (54) drives, for a predetermined test period (18), at least one drive axle (60) of the motor vehicle (52) with an additional test drive torque with the drive actuation means (69), and brakes at least one axle (58, 60), which is not driven with the test drive torque, of the motor vehicle (52) or of the vehicle combination with an additional test brake pressure with the brake actuation means (73), wherein the vehicle movement dynamics control device (54) is designed to select the test drive torque and the test brake pressure in such a way that the travel of the motor vehicle (52) or of the vehicle combination is neither decelerated nor accelerated by said test drive torque or test brake pressure, and the vehicle movement dynamics control device (54) is designed to detect, with slip detection means, the slip (36) of at least the wheels (56), lying on the inside of a bend, of the braked and driven axles (58, 60) and to detect the critical transverse acceleration values (44) using the slip (36).

7. Vehicle movement dynamics control device according to Claim 6,
**characterized in that**
the vehicle movement dynamics control device (54) is designed to detect the slip (26) of the wheels (56), lying on the outside of a bend, of the braked and driven axles (58, 60) with the slip detection means during the additional braking and driving, and said vehicle movement dynamics control device (54) is designed in such a way that in the event of a detected slip (26) of the wheels (56), lying on the outside of a bend, of the braked and driven axles (58, 60) being above a threshold value (30), said vehicle movement dynamics control device (54) already aborts the additional braking and driving by the drive actuation means (69) and brake actuation means (73) before the expiry of the test period (18).

8. Vehicle movement dynamics control device according to Claim 6 or 7,
**characterized in that**
the vehicle movement dynamics control device (54) is designed in such a way that, in the event of braking or acceleration being requested by a driver of the motor vehicle (52) or of the vehicle combination during the additional braking and driving, said vehicle movement dynamics control device (54) additionally executes this braking or acceleration and takes it into account during the detection of the critical transverse acceleration values (44).

9. Vehicle movement dynamics control device according to one of Claims 6 to 8,
**characterized in that**
the vehicle movement dynamics control device (54) is designed to detect the critical transverse acceleration values (44) taking into account the slip (26, 34), detected using the slip detection means during the additional braking and driving, of one or more wheels (56) and taking into account the transverse acceleration (12) which is detected with the transverse acceleration sensor (74).

10. Vehicle movement dynamics control device according to one of Claims 6 to 9,
**characterized in that**
the vehicle movement dynamics control device (54) is designed to determine the critical transverse acceleration values (44) with the slip (34) **in that** firstly the centre of gravity (40), in particular the height of the centre of gravity, is determined (46) from the slip (34), and the critical transverse acceleration values (44) are determined (46) by means of the centre of gravity.

## Revendications

1. Procédé pour la détermination d'une ou de plusieurs valeur(s) d'accélération transversale critique(s) d'un véhicule automobile (52) ou d'un train de véhicules avec un véhicule automobile (52), dans lequel le véhicule automobile (52) présente un dispositif de régulation de la dynamique de roulage (54) et au moins un détecteur d'accélération transversale (74) et on détermine avec le détecteur d'accélération transversale (74) l'accélération transversale agissant sur le véhicule automobile (52) et dans le cas où l'accélération transversale déterminée par le détecteur d'accélération transversale (74) correspond à une ou plusieurs valeur(s) d'accélération transversale critique(s) (44) on stabilise (50) le comportement routier du véhicule automobile (52) ou du train de véhicules avec le dispositif de régulation de la dynamique de roulage (54) par des interventions de régulation sur un entraînement (68) et/ou sur un dispositif de freinage (72),
**caractérisé en ce que** dans le cas où une accélération transversale déterminée (12) atteint ou dépasse un seuil prédéfini d'accélération transversale (14) pendant une durée de test prédéterminée (18) on entraîne au moins un essieu moteur (60) du véhicule automobile (52) avec un couple d'entraînement de test supplémentaire (20) et on freine (22) au moins un essieu (58, 60) du véhicule automobile (52) ou du train de véhicules non entraîné avec le couple d'entraînement de test avec une pression de freinage de test supplémentaire, dans lequel on choisit le couple d'entraînement de test et la pression de freinage de test de telle manière que le mouvement du véhicule automobile (52) ou du train de véhicules ne soit ni ralenti ni accéléré par ceux-ci, et on détermine un patinage (34) au moins des roues (56) des essieux freinés et entraînés (58, 60) situées sur le côté intérieur du virage et on détermine avec le patinage (34) les valeurs d'accélération transversale critiques (44) .

2. Procédé selon la revendication 1, **caractérisé en ce que** pendant le freinage et l'entraînement supplémentaires on détermine le patinage (26) des roues (56) des essieux freinés et entraînés (58, 60) situées sur le côté extérieur du virage et dans le cas où le patinage déterminé (26) des roues (56) des essieux freinés et entraînés (58, 60) situées sur le côté extérieur du virage est supérieur à une valeur de seuil (30), on interrompt le freinage (22) et l'entraînement (20) supplémentaires déjà avant l'expiration de la durée de test (18).

3. Procédé selon la revendication 1 ou 2, **caractérisé en ce que** pendant le freinage et l'entraînement supplémentaires dans le cas d'un freinage ou d'une accélération (24) demandé(e) par le conducteur du véhicule automobile (52) ou du train de véhicules, on effectue en plus ce freinage ou cette accélération demandé(e) et on en tient compte lors de la détermination (46) des valeurs d'accélération transversale critiques (44).

4. Procédé selon l'une quelconque des revendications 1 à 3, **caractérisé en ce que** l'on détermine les valeurs d'accélération transversale critiques (44) au moins en tenant compte du patinage (26, 34) d'une ou de plusieurs roue (s) (56) lors du freinage et de l'entraînement supplémentaires ainsi que de l'accélération transversale déterminée (12).

5. Procédé selon l'une quelconque des revendications 1 à 4, **caractérisé en ce que** l'on détermine (46) les valeurs d'accélération transversale critiques (44) avec le patinage (34), par le fait que l'on détermine (46) à partir du patinage (34) d'abord le centre de gravité (40), en particulier la hauteur du centre de gravité, et au moyen du centre de gravité les valeurs d'accélération transversale critiques (44).

6. Dispositif de régulation (54) de la dynamique de roulage pour la détermination d'une ou de plusieurs valeur(s) d'accélération transversale critique(s) d'un véhicule automobile (52) ou d'un train de véhicules avec un véhicule automobile (52), dans lequel le dispositif de régulation de la dynamique de roulage (54) présente au moins un détecteur d'accélération transversale (74), qui est configuré pour déterminer des accélérations transversales agissant sur le véhicule automobile (52), et le dispositif de régulation de la dynamique de roulage (54) est configuré pour, dans le cas où l'accélération transversale déterminée par le détecteur d'accélération transversale (74) correspond à une ou plusieurs valeur(s) d'accélération transversale critique(s) (44), stabiliser (50) le comportement routier du véhicule automobile (52) ou du train de véhicules avec le dispositif de régulation de la dynamique de roulage (54) par des interventions de régulation sur un entraînement (68) et/ou sur un dispositif de freinage (72),
**caractérisé en ce que** le dispositif de régulation de la dynamique de roulage (54) présente des moyens de commande d'entraînement (69) et des moyens de commande de freinage (73) et le dispositif de régulation de la dynamique de roulage (54) est configuré pour, dans le cas où une accélération transversale déterminée (12) atteint ou dépasse un seuil prédéfini d'accélération transversale (14) pendant une durée de test prédéterminée (18), entraîner avec les moyens de commande d'entraînement (69) au moins un essieu moteur (60) du véhicule automobile (52) avec un couple d'entraînement de test supplémentaire et freiner avec les moyens de commande de freinage (73) au moins un essieu (58, 60) du véhicule automobile (52) ou du train de véhicules non entraîné avec le couple d'entraînement de test avec une pression de freinage de test supplémentaire, dans lequel le dispositif de régulation de la dynamique de roulage (54) est configuré pour choisir le couple d'entraînement de test et la pression de freinage de test de telle manière que le mouvement du véhicule automobile (52) ou du train de véhicules ne soit ni ralenti ni accéléré par ceux-ci, et le dispositif de régulation de la dynamique de roulage (54) est configuré pour déterminer avec des moyens de détection du patinage le patinage (36) au moins des roues (56) des essieux freinés et entraînés (58, 60) situées sur le côté intérieur du virage et pour déterminer avec le patinage (36) les valeurs d'accélération transversale critiques (44).

7. Dispositif de régulation de la dynamique de roulage selon la revendication 6, **caractérisé en ce que** le dispositif de régulation de la dynamique de roulage (54) est configuré pour déterminer, avec les moyens de détection du patinage, pendant le freinage et l'entraînement supplémentaires, le patinage (26) des roues (56) des essieux freinés et entraînés (58, 60) situées sur le côté extérieur du virage et, dans le cas où un patinage déterminé (26) des roues (56) des essieux freinés et entraînés (58, 60) situées sur le côté extérieur du virage est supérieur à une valeur de seuil (30), pour interrompre le freinage et l'entraînement supplémentaires par les moyens de commande d'entraînement (69) et les moyens de commande de freinage (73) déjà avant l'expiration de la durée de test (18).

8. Dispositif de régulation de la dynamique de roulage selon la revendication 6 ou 7, **caractérisé en ce que** le dispositif de régulation de la dynamique de roulage (54) est configuré pour, pendant le freinage et l'entraînement supplémentaires, dans le cas d'un freinage ou d'une accélération demandé(e) par un conducteur du véhicule automobile (52) ou du train de véhicules, effectuer en plus ce freinage ou cette accélération et en tenir compte lors de la détermination des valeurs d'accélération transversale critiques (44) .

9. Dispositif de régulation de la dynamique de roulage selon l'une quelconque des revendications 6 à 8, **caractérisé en ce que** le dispositif de régulation de la dynamique de roulage (54) est configuré pour déterminer les valeurs d'accélération transversale critiques (44) en tenant compte du patinage (26, 34) d'une ou de plusieurs roue(s) (56) déterminé pendant le freinage et l'entraînement supplémentaires avec les moyens de détection du patinage ainsi que de l'accélération transversale (12) déterminée avec le détecteur d'accélération transversale (74).

10. Dispositif de régulation de la dynamique de roulage selon l'une quelconque des revendications 6 à 9, **caractérisé en ce que** le dispositif de régulation de la dynamique de roulage (54) est configuré pour déterminer les valeurs d'accélération transversale critiques (44) avec le patinage (34), par le fait que l'on détermine (46) à partir du patinage (34) d'abord le centre de gravité (40), en particulier la hauteur du centre de gravité, et au moyen du centre de gravité les valeurs d'accélération transversale critiques (44).
